# EUROPÄISCHE PATENTANMELDUNG

(11) **EP 4 119 029 A1**
(43) Veröffentlichungstag der Anmeldung: **18.01.2023**
(21) Anmeldenummer: 22183553.1
(22) Anmeldetag: 07.07.2022
(51) Int. Cl.: A47L 15/44, A47L 15/00, A47L 15/42

(54) **GESCHIRRSPÜLMASCHINE, VERFAHREN ZUR STEUERUNG EINER GESCHIRRSPÜLMASCHINE UND COMPUTERPROGRAMM SOWIE DATENTRÄGER**

(30) Priorität: 15.07.2021 DE 102021207534
(71) Anmelder: E.G.O. Elektro-Gerätebau GmbH, 75038 Oberderdingen (DE)
(72) Erfinder: Schaumann, Uwe, 75038 Oberderdingen (DE); Thimm, Wolfgang, 76137 Karlsruhe (DE)
(74) Vertreter: Patentanwälte Ruff, Wilhelm, Beier, Dauster & Partner mbB

(57) **Zusammenfassung**

Eine Geschirrspülmaschine (11) weist eine Spülkammer (14) mit Kammerwandungen und mit einem Auslass (19), Wasserleitungen, Ventilen, einer Pumpe (22), einem Wassereinlass in die Spülkammer (14), ein Dosiermodul (36) in der Spülkammer (14), das Vorratskammern für Zusatzstoffe und Reinigungsstoffe für ein Reinigungsverfahren aufweist, wobei das Dosiermodul (36) als eigenständige Baueinheit unabhängig von der Geschirrspülmaschine ausgebildet ist und aus dieser entnehmbar ist. Es ist eine Steuerung (26) für die Geschirrspülmaschine (11), für das Dosiermodul (36), für die Pumpe (22) und für die Ventile vorgesehen. Das Dosiermodul (36) weist ein Kommunikationsmodul (38) auf zur Kommunikation mit der Steuerung (26), wobei entlang einer Kammerwandung der Spülkammer (14) eine flächige Übertragungsvorrichtung (32) zur Übertragung von Signalen und Energie angeordnet ist, die eine Vielzahl von induktiv aneinander gekoppelten L-C-Schwingkreisen aufweist mit jeweils einer Überträgerspule und einer Überträgerkapazität. Die Übertragungsvorrichtung (32) verbindet Steuerung (26) und Dosiermodul (36) signalübertragend miteinander.

## Beschreibung

### Anwendungsgebiet und Stand der Technik

Die Erfindung betrifft eine Geschirrspülmaschine sowie ein Verfahren zur Steuerung einer solchen Geschirrspülmaschine, ein zum Durchführen des Verfahrens an einer Steuerung der Geschirrspülmaschine ausgebildetes Computerprogramm und einen Datenträger, auf dem ein solches Computerprogramm gespeichert ist.

Aus der WO 2020/152004 A1 ist ein Reinigungssystem bekannt, das als eigenständiges Modul in eine Geschirrspülmaschine als eine Art Dosiermodul eingesetzt werden kann. Des Weiteren ist es autark ausgebildet und enthält sowohl mehrere unterschiedliche Zusatzstoffe und/oder Reinigungsstoffe für ein Reinigungsverfahren in der Geschirrspülmaschine als auch eine eigenständige Steuerung samt Dosierung der vorgenannten Stoffe. Ebenso ist eine eigene Energieversorgung vorgesehen. Ansteuerung und Energieversorgung machen dieses Dosiermodul jedoch aufwändig.

Aus der DE 10 2017 201 109 A1 ist ein Kochfeld bekannt mit einer Kochfeldplatte und darunter angeordneten Induktionsheizspulen. Zusätzlich ist eine flächig ausgedehnte Übertragungsvorrichtung vorgesehen, die aus induktiv aneinandergekoppelten Schwingkreisen besteht. Jeder dieser Schwingkreise weist eine Übertragungsspule und eine Übertragungskapazität auf, die einen L-C-Schwingkreis bilden. Diese Übertragungsvorrichtung ist sehr flach bzw. dünn ausgebildet und kann dazu dienen, Zusatz-Bedienelemente oder auch eine Beleuchtung von einer anderen Stelle aus anzusteuern. So kann insbesondere der Aufwand eingespart werden, im Bereich von mehreren möglicherweise eng platzierten Induktionsheizspulen auch noch eine Verkabelung bzw. Zuleitung vorzusehen.

### Aufgabe und Lösung

Der Erfindung liegt die Aufgabe zugrunde, eine eingangs genannte Geschirrspülmaschine, ein eingangs genanntes Verfahren, ein eingangs genanntes Computerprogramm sowie einen dafür ausgebildeten Datenträger zu schaffen, mit denen Probleme des Standes der Technik gelöst werden können und es insbesondere möglich ist, eine Geschirrspülmaschine mit einem vorgenannten Dosiermodul darin gut und gebrauchstauglich betreiben zu können.

Gelöst wird diese Aufgabe durch eine Geschirrspülmaschine mit den Merkmalen des Anspruchs 1, durch ein Verfahren mit den Merkmalen des Anspruchs 13, durch ein Computerprogramm mit den Merkmalen des Anspruchs 14 und durch einen Datenträger mit den Merkmalen des Anspruchs 15. Vorteilhafte sowie bevorzugte Ausgestaltungen der Erfindung sind Gegenstand der weiteren Ansprüche und werden im Folgenden näher erläutert. Dabei werden manche der Merkmale nur für die Geschirrspülmaschine, nur für das Verfahren, nur für das Computerprogramm oder nur für den Datenträger beschrieben. Sie sollen jedoch unabhängig davon sowohl für eine Geschirrspülmaschine als auch für ein Verfahren zu dessen Steuerung und ein Computerprogramm und einen Datenträger selbständig und unabhängig voneinander gelten können. Der Wortlaut der Ansprüche wird durch ausdrückliche Bezugnahme zum Inhalt der Beschreibung gemacht.

Die erfindungsgemäße Geschirrspülmaschine weist eine Spülkammer mit Kammerwandungen, mit einem Auslass sowie mit Wasserleitungen, Ventilen und einer Pumpe auf. Dies ist üblicherweise bei Geschirrspülmaschinen so vorgesehen. Es ist mindestens ein Wassereinlass in die Spülkammer vorgesehen, der mittels Wasserleitungen mit der Pumpe verbunden ist. Ähnliches kann für einen Auslass aus der Spülkammer gelten. Dieser ist in der Regel mit Filtern an die Pumpe geführt. Des Weiteren ist ein Dosiermodul für die Geschirrspülmaschine vorgesehen, das in die Spülkammer eingesetzt wird bzw. das in der Spülkammer verwendet wird. Das Dosiermodul enthält Zusatzstoffe und/oder Reinigungsstoffe, wie sie aus dem eingangs genannten Stand der Technik bekannt sind. Diese Stoffe werden in ein Reinigungsverfahren in der Geschirrspülmaschine eingegeben bzw. hinzugefügt, natürlich passend zum jeweiligen Fortschritt des Verfahrens. Das Dosiermodul weist für einen Zusatzstoff und/oder einen Reinigungsstoff mindestens eine Vorratskammer auf, vorteilhaft mehrere Vorratskammern für mehrere Stoffe. Es weist des Weiteren mindestens ein Dosierventil auf, um einen entsprechenden Stoff in die Spülkammer hinein freizugeben bzw. einzudosieren. Das Dosiermodul ist dabei als eigenständige Baueinheit ausgebildet, die aus der Geschirrspülmaschine bzw. der Spülkammer entnommen werden kann und davon unabhängig ist. Insbesondere kann ein Entnehmen werkzeuglos mit geringem Aufwand erfolgen. Schließlich weist die Geschirrspülmaschine noch eine Steuerung auf, die auch für das Dosiermodul, für die Pumpe und für die Ventile verwendet werden kann. Besonders vorteilhaft ist in der gesamten Geschirrspülmaschine nur eine einzige Steuerung vorhanden, die an sich auch die Befehle an das Dosiermodul gibt, welche darin dann von den vorgenannten Dosierventilen umgesetzt werden. Zusätzlich kann ein Dosiermodul auch Sensoren aufweisen, die ebenfalls von der Steuerung angesteuert bzw. ausgewertet werden können. So muss das Dosiermodul keine Steuerung für derartige Sensoren aufweisen.

Erfindungsgemäß weist das Dosiermodul ein Kommunikationsmodul auf, um mit der Steuerung zu kommunizieren. Vorteilhaft ist dies eine bidirektionale Kommunikation. Des Weiteren weist die Geschirrspülmaschine eine Übertragungsvorrichtung auf, die zur Zusammenarbeit mit dem Kommunikationsmodul des Dosiermoduls ausgebildet ist bzw. die beiden sind aufeinander abgestimmt. Die Übertragungsvorrichtung ist flächig ausgebildet, vorzugsweise mit einer Größe von mindestens 5 cm x 10 cm, insbesondere mindestens 20 cm x 50 cm. Sie ist entlang einer Kammerwandung der Spülkammer angeordnet, insbesondere an der Außenseite oder Unterseite der Kammer bzw. außerhalb der Spülkammer. Diese Übertragungsvorrichtung ist zur Übertragung von Signalen und/oder von Energie in der Fläche der Übertragungsvorrichtung ausgebildet. So können insbesondere mit dem Dosiermodul, möglicherweise auch mit weiteren Funktionseinheiten in der Spülkammer bzw. an der Geschirrspülmaschine, Signale ausgetauscht werden bzw. es kann kommuniziert werden. Des Weiteren soll ggf. auch Energie übertragen werden können, so dass das Dosiermodul wie vorbeschrieben, ggf. wie auch andere Funktionseinheiten, keine eigene Energieversorgung aufweisen muss. Dadurch kann deren Ausgestaltung sowie deren Anordnung erheblich freier und vorteilhafter erfolgen.

Die Übertragungsvorrichtung weist eine Vielzahl von Schwingkreisen auf, die induktiv aneinander gekoppelt sind. Jeder Schwingkreis weist eine Übertragerspule und eine Übertragerkapazität auf und ist somit als L-C-Schwingkreis ausgebildet. Die Übertragerspule bzw. eine Induktivität und die Übertragerkapazität bzw. eine Kapazität sind vorteilhaft getrennt voneinander ausgebildet, können aber ggf. auch in einem einzigen Bauteil realisiert sein. Die Übertragerspulen verlaufen dabei im Wesentlichen in der Fläche, in der auch die gesamte Übertragungsvorrichtung verläuft. Diese Fläche ist vorteilhaft parallel zur Kammerwandung der Spülkammer in dem Bereich, in dem das Dosiermodul vorteilhaft angeordnet ist. Die Schwingkreise bzw. die Übertragerspulen weisen auch relativ geringen Abstand zueinander auf, vorteilhaft zwischen 1 % und 10 % des Durchmessers einer Übertragerspule bzw. zwischen 1 mm und 20 mm. Die Übertragungsvorrichtung reicht dabei bis zu einem Ort, an dem das Dosiermodul bzw. das Kommunikationsmodul angeordnet ist oder vorteilhaft angeordnet werden kann. So ist deren signalübertragende Verbindung möglichst gut herstellbar. Des Weiteren ist zumindest im Betrieb der Geschirrspülmaschine die Übertragungsvorrichtung mit der Steuerung signalübertragend verbunden, insbesondere direkt angeschlossen. Ebenso sind vorteilhaft eine Leistungselektronik bzw. ein Inverter in der Geschirrspülmaschine vorgesehen, der ebenfalls mit der Übertragungsvorrichtung verbunden sein kann. Dies wird nachfolgend noch näher erläutert.

In bevorzugter Ausgestaltung der Erfindung ist eine signalübertragende Verbindung zwischen dem Kommunikationsmodul des Dosiermoduls und der Übertragungsvorrichtung drahtlos ausgebildet, besonders bevorzugt eben induktiv über die genannte Entfernung von einigen Zentimetern hinweg. So kann eine signalübertragende Verbindung durch die Kammerwandung hindurch an das Dosiermodul gut und sicher erfolgen. Dafür weist das Kommunikationsmodul besonders vorteilhaft eine Spule auf, die mit der Übertragungsvorrichtung induktiv gekoppelt werden kann. Derartige induktiv koppelbare Spulen gerade auch für Kommunikationsmodule sind dem Fachmann bekannt.

In einer Ausgestaltung der Erfindung kann das Dosiermodul ohne eigene Energieversorgung ausgebildet sein, so dass es eben nur mittels der Übertragungsvorrichtung mit Energie versorgt wird, vorzugsweise drahtlos. Dies ist eine sehr einfache Ausgestaltung. In möglicher weiterer Ausgestaltung der Erfindung kann vorgesehen sein, dass dennoch im Dosiermodul eine eigene Energiequelle vorgesehen ist. Dies weist den Vorteil auf, dass dann auch bei Entnahme des Dosiermoduls aus der Spülkammer gewisse Funktionen und/oder Speicherinhalte odgl. erhalten bleiben können. Dies kann auch für Anzeigen odgl. gelten. Eine Energieversorgung bzw. interne Energiequelle für das Dosiermodul kann ein Akkumulator oder eine Batterie sein, möglicherweise auch in einfacher Ausgestaltung ein Kondensator. Das Aufladen einer wiederaufladbaren entsprechenden Energiequelle kann mittels der Übertragungsvorrichtung erfolgen.

In einer grundsätzlich möglichen Ausgestaltung der Erfindung kann die Steuerung zwar direkt bzw. galvanisch mit der Übertragungsvorrichtung signalübertragend verbunden sein, beispielsweise über abgedichtete elektrische Kontakte und/oder eine abgedichtete Leitung durch die Kammerwandung der Spülkammer hindurch. Vorteilhaft ist aber eine drahtlose und induktive signalübertragende Verbindung vorgesehen, die es insbesondere ermöglicht, die Kammerwandung ohne Durchbrüche auszubilden und Isolationsprobleme bei der Signalübertragung und der Energieübertragung vermeiden zu können. Dazu kann die Steuerung mit einer Steuerungsspule verbunden sein, die wiederum induktiv mit der Übertragungsvorrichtung gekoppelt ist. Dies könnte dann entsprechend wie bei der signalübertragenden Verbindung zwischen Dosiermodul und Übertragungsvorrichtung ausgebildet sein.

In vorteilhafter weiterer Ausgestaltung der Erfindung ist die Steuerung mit einem Inverter bzw. allgemein einer Leistungselektronik der Geschirrspülmaschine verbunden. Auch dieser Inverter ist mit der Steuerungsspule verbunden, insbesondere signalübertragend und energieübertragend verbunden. Dazu kann der Inverter in einem Ansteuer-Modus die Steuerungsspule und insbesondere die Übertragungsvorrichtung ansteuern, um mittels der Übertragungsvorrichtung Signale und gegebenenfalls auch Energie an sich an das Kommunikationsmodul bzw. an das Dosiermodul zu übertragen. Die eingangs genannte allgemeine Energieversorgung des Dosiermoduls erfolgt also vorteilhaft über den genannten Inverter, losgelöst davon, ob dieser direkt bzw. galvanisch oder induktiv an die Übertragungsvorrichtung angekoppelt ist.

Des Weiteren können der Inverter bzw. die Leistungselektronik dazu ausgebildet sein, in einem weiteren Modus, nämlich einem Pumpen-Modus, die Pumpe der Geschirrspülmaschine mit Energie bzw. Leistung zu versorgen und anzutreiben. Dazu kann die Steuerung entsprechende Steuersignale erzeugen zum möglichst optimalen Betrieb der Pumpe. Des Weiteren kann die Geschirrspülmaschine auch eine Heizung aufweisen, die vorteilhaft in die Pumpe integriert ist. Auch diese Heizung kann gegebenenfalls durch den Inverter bzw. durch eine Leistungselektronik angesteuert und betrieben werden.

Die genannte Steuerung der Geschirrspülmaschine ist dazu ausgebildet, in der Geschirrspülmaschine vorhandene Ventile anzusteuern. Ebenso können damit in der Geschirrspülmaschine vorhandene Sensoren angesteuert werden.

Vorteilhaft ist die Steuerung die einzige Steuerung in der gesamten Geschirrspülmaschine, wobei sie einen Mikrocontroller aufweisen kann, welcher dann der einzige Mikrocontroller in der gesamten Geschirrspülmaschine ist. Auch das Dosiermodul kann dann ohne eigenen Mikrocontroller ausgebildet sein. Dies vereinfacht dessen Aufbau.

In weiterer vorteilhafter Ausgestaltung der Erfindung kann vorgesehen sein, dass eine signalübertragende Verbindung nicht nur mittels der Übertragungsvorrichtung an das Dosiermodul erfolgen kann, sondern auch nach außerhalb der Geschirrspülmaschine, insbesondere an ein mobiles Endgerät. So kann ein solches mobiles Endgerät, welches vorteilhaft ein Tablet-Computer oder ein Smartphone sein kann, signalübertragend und ggf. auch energieübertragend an die Geschirrspülmaschine verbunden werden bzw. mit dieser verbunden werden. Dies ermöglicht eine Bedienung der Geschirrspülmaschine mittels dieses mobilen Endgeräts, was ansonsten schwieriger wäre. So kann die Übertragungsvorrichtung auch entlang einer Außenseite der Geschirrspülmaschine vorgesehen sein, aber innen darin, also nicht an der Außenseite selbst. Hier bietet sich beispielsweise eine Tür der Geschirrspülmaschine an, an der ein mobiles Endgerät angeordnet oder befestigt werden kann und dann signalübertragend mit der Steuerung und/oder dem Dosiermodul verbunden ist. Dies erfolgt vorteilhaft durch eine induktive Kopplung bzw. durch ein NFC-Verfahren, welche heutzutage in vielen mobilen Endgeräten vorgesehen sind.

In vorteilhafter weiterer Ausgestaltung der Erfindung kann die Übertragungsvorrichtung nicht nur als eine Art breites Band von einem Ort der Verbindung mit der Steuerung und/oder der Leistungselektronik bzw. dem Inverter zu einem vorgesehenen Ort für das Dosiermodul verlaufen. Vielmehr kann die Übertragungsvorrichtung auch eine größere Fläche, insbesondere unten am Boden der Spülkammer als Kammerwandung, einnehmen. So kann die Übertragungsvorrichtung mindestens ein Drittel dieser Bodenfläche einnehmen, vorzugsweise mindestens zwei Drittel. Dann ist es auch leicht möglich, das Dosiermodul an anderer Stelle unten in der Spülkammer zu platzieren, beispielsweise aus variierenden technischen Gründen. Ebenso können unter Umständen weitere Sensoren oder Funktionseinheiten unten in der Spülkammer angeordnet werden und dann auf einfache Art und Weise mit der Steuerung und/oder einer Leistungselektronik bzw. einem Inverter zur Energieversorgung verbunden werden.

In vorteilhafter Weiterbildung der Erfindung sind die Übertragungsvorrichtung und die Steuerung dazu ausgebildet, einen Ort zu erkennen, an dem das Dosiermodul in der Spülkammer angeordnet ist. Dazu sollte das Dosiermodul natürlich wiederum in der notwendigen geringen Entfernung zur Übertragungsvorrichtung angeordnet sein. Dies kann beispielsweise dazu genutzt werden, dass ein Wassereinlass, der eine verstellbare Düse odgl. aufweist, so angesteuert wird, dass Wasser zumindest für eine begrenzte Zeit lang möglichst an den Ort hin ausgebracht ist, an dem das Dosiermodul angeordnet ist. So kann der davon freigesetzte Stoff möglichst gut aufgelöst werden und somit zur Anwendung kommen. So kann die Steuerung also beispielsweise eine verstellbare Düse auf das Dosiermodul richten, wobei sie dessen Anbringungsort in der Spülkammer mittels der Übertragungsvorrichtung ermittelt hat.

Das erfindungsgemäße Verfahren, mit dem die Steuerung über die Übertragungsvorrichtung das Dosiermodul ansteuern kann, kann durch ein entsprechendes Computerprogramm realisiert sein. Dieses kann in die Steuerung bzw. in einen Speicher der Steuerung gespielt werden. Dieses Computerprogramm ist vorteilhaft auf einem Datenträger gespeichert, der beispielsweise ein Speicherchip sein kann, alternativ auch eine Diskette, DVD odgl..

Diese und weitere Merkmale gehen außer aus den Ansprüchen auch aus der Beschreibung und den Zeichnungen hervor, wobei die einzelnen Merkmale jeweils für sich alleine oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte und Zwischen-Überschriften beschränkt die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine schematische und vereinfachte Darstellung eines Aufbaus einer erfindungsgemäßen Geschirrspülmaschine,
- Fig. 2: der untere Bereich der Geschirrspülmaschine aus Fig. 1 in etwas größerer Darstellung,
- Fig. 3: eine Variation des unteren Bereichs der Geschirrspülmaschine mit einer externen Bedieneinrichtung an einer Tür,
- Fig. 4: eine Schrägdarstellung der Ansicht aus Fig. 3,
- Fig. 5: eine Funktionsübersicht der Erfindung mit Darstellung, wie ein Übertrager mit mehreren Funktionseinheiten signalübertragend verbunden ist,
- Fig. 6: eine Draufsicht auf den Übertrager mit rechteckigen einwindigen Übertragerspulen und Übertragerkapazitäten als L-C-Schwingkreise und
- Fig. 7: einen einzelnen L-C-Schwingkreis mit einer einwindigen Übertragerspule und einem Kondensator als Übertragerkapazität.

### Detaillierte Beschreibung der Ausführungsbeispiele

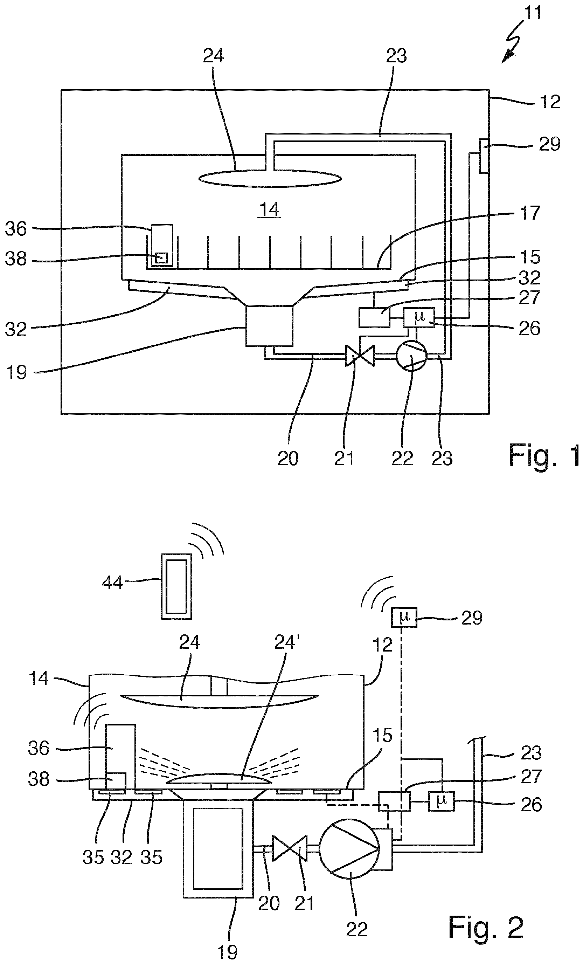

In der Fig. 1 ist eine erfindungsgemäße Geschirrspülmaschine 11 dargestellt in einem Gehäuse 12, in dem sich eine Spülkammer 14 befindet. Die Spülkammer 14 hat seitliche Kammerwandungen und einen oberen Deckel sowie einen Spülkammerboden 15. Der Zugang erfolgt über eine hier nicht dargestellte Tür.

Unten in der Spülkammer 14 ist ein Korb 17 angeordnet, weitere Körbe könnten insbesondere noch darüber angeordnet sein. Am Spülkammerboden 15 ist ein Ablauf 19 nach unten vorgesehen, möglicherweise abgehend von einem sogenannten Sumpf der Spülkammer 14. In dem Ablauf 19 ist vorteilhaft eine an sich bekannte Filtervorrichtung vorgesehen. Von dem Ablauf 19 führt eine Pumpenleitung 20 mittels eines Pumpenventils 21 zu einer Pumpe 22. Mittels des Pumpenventils 21 kann ein Wasserfluss gesteuert werden, selbstverständlich natürlich auch über den Betrieb der Pumpe 22. Von der Pumpe 22 wiederum geht eine Zuleitung 23 seitlich weg und dann nach oben hin zu einem Sprüharm 24, der oben in der Spülkammer 14 auf bekannte Art und Weise angeordnet ist. Ein weiterer Sprüharm könnte noch gemäß Fig. 2 unten in der Spülkammer 14 vorgesehen sein, wie dies an sich auch aus dem Stand der Technik bekannt ist.

Die Geschirrspülmaschine 11 weist eine Steuerung 26 auf, welche mit einer Leistungselektronik 27 verbunden ist bzw. welche diese ansteuert. Die Steuerung 26 ist vorteilhaft für die gesamte Geschirrspülmaschine 11 zuständig und somit die einzige Steuerung, insbesondere mit einem einzigen Mikrocontroller. Somit ist die Steuerung 26 für eine hier nicht dargestellte integrierte Bedieneinrichtung der Geschirrspülmaschine 11 vorgesehen, aber auch um die Pumpe 22 zu steuern sowie das Pumpenventil 21 und weitere, hier nicht dargestellte Ventile, die selbstverständlich vorhanden sind. Die Steuerung 26 steuert die Pumpe 22 allerdings nicht direkt an, zumindest nicht einen Pumpenmotor, sondern über eine Leistungselektronik 27, vorteilhaft einen Inverter. In vorteilhafter Ausgestaltung der Erfindung kann die Pumpe 22 auch eine zugeordnete Heizeinrichtung aufweisen, besonders vorteilhaft darin integriert. Auch diese Heizeinrichtung kann dann vorteilhaft über die Steuerung 26 und die Leistungselektronik 27 genau angesteuert werden. In der Pumpe 22, insbesondere an der genannten Heizeinrichtung, angeordnete Sensoren, insbesondere Temperatursensoren, werden ebenfalls über die Steuerung 26 ausgewertet.

Die Steuerung 26 ist noch mit einer Kommunikationseinrichtung 29 verbunden, die in Fig. 1 rechts oben am Gehäuse 12 dargestellt ist. Diese Kommunikationseinrichtung 29 kann eine Schnittstelle nach außen sein, beispielsweise für einen Service der Geschirrspülmaschine 11, alternativ auch für mobile externe Bedieneinrichtungen, beispielsweise mobile Endgeräte, die drahtlos angebunden werden können und mit denen die Geschirrspülmaschine 11 gesteuert werden kann oder zumindest ihr Betrieb überwacht werden kann. Somit könnte die Kommunikationseinrichtung 29 beispielsweise als USB-Steckanschluss ausgebildet sein, vorteilhaft für eine drahtlose Kommunikation, beispielsweise mittels NFC, Bluetooth odgl..

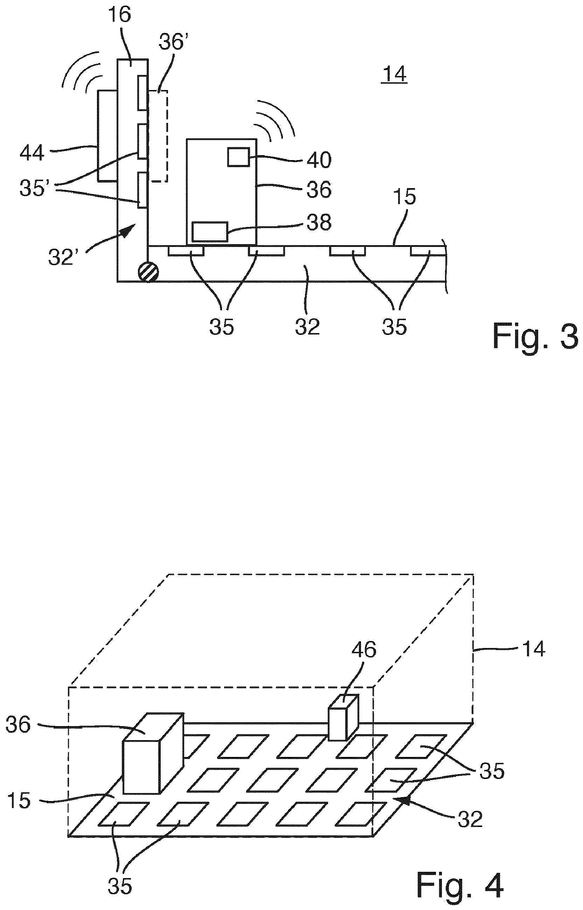

Unten an dem Spülkammerboden 15, insbesondere an dessen Unterseite angeordnet, so dass keine Dichtigkeitsprobleme entstehen können, ist ein Übertrager 32 angeordnet als erfindungsgemäße vorbeschriebene Übertragungsvorrichtung. Eine solche Übertragungsvorrichtung ist aus der eingangs genannten DE 10 2017 201 109 A1 bekannt, auf welche bezüglich Details zu Aufbau und konstruktiver Ausgestaltung explizit verwiesen wird. Der Übertrager 32 kann in einer Ausgestaltung der Erfindung im Wesentlichen direkt von einem Ort nahe der Steuerung 26 oder über dieser bis hin zu einem Bereich unterhalb eines Dosiermoduls 36 verlaufen. Dann ist die Anordnung des Dosiermoduls 36 aber auf eine Stelle oberhalb dieses streifenförmigen Übertragers 32 eingeschränkt. Alternativ und vorteilhaft nimmt der Übertrager 32 eine Fläche ein, die im Wesentlichen dem Spülkammerboden 15 entspricht, natürlich mit einem Ausschnitt um den Ablauf 19 herum. Dann kann zum einen das Dosiermodul 36 beliebig platziert werden. Des Weiteren können dann, wie nachfolgend noch näher erläutert wird, auch andere Zusatzsensoren, Zusatzaktoren oder Zusatzgeräte damit signalübertragend und ggf. auch leistungsübertragend verbunden werden und somit von der Steuerung 26 angesteuert und/oder ausgewertet werden. Wie aus der Vergrößerung der Fig. 3 zu ersehen ist, weist das Dosiermodul 36 im unteren Bereich eine Modulspule 38 auf, welche zur Verbindung mit dem Übertrager 32 ausgebildet ist und somit dem vorgenannten Kommunikationsmodul entspricht. Hierzu wird auf die vorstehende Beschreibung verwiesen sowie auch auf die vorgenannte DE 10 2017 201 109 A1.

Das Dosiermodul 36 selbst ist vorteilhaft ausgebildet wie aus der WO 2020/152004 A1 bekannt. Eine dort beschriebene integrierte Steuerung des Dosiermoduls 36 kann mit der Erfindung erheblich einfacher ausgebildet sein. Vor allem ist auch eine Energiequelle des Dosiermoduls 36 überflüssig, da eine Energiezufuhr bzw. Leistungsübertragung mittels des Übertragers 32 erfolgen kann. Die Ansteuerung des Übertragers 32 erfolgt ebenfalls mit der Leistungselektronik 27 über die Steuerung 26. Da der Übertrager 32 ja aus einer Vielzahl von Schwingkreisen 35 besteht, wie die nachfolgenden Figuren im Detail zeigen und wie dazu beschrieben wird, übernimmt die Leistungselektronik 27 bzw. der entsprechende Inverter diese Funktion. Ein Leistungsbedarf des Dosiermoduls 36 samt seiner darin enthaltenen Ventile, Sensoren odgl. wird in der Regel nicht sehr groß sein und kann somit problemlos über die Leistungselektronik 27 versorgt werden. So kann beispielsweise das Zudosieren von in dem Dosiermodul 36 enthaltenen Zusatzstoffen wie Waschmittel, Weichspüler, Enthärter odgl. von der Steuerung 26 sehr genau gesteuert werden. Ebenso kann die Steuerung 26 auf Informationen von Sensoren odgl. zugreifen, die in dem Dosiermodul 36 enthalten sind.

In der etwas erweiterten Darstellung eines Ausschnitts der Geschirrspülmaschine 11 gemäß der Fig. 2 ist ein unterer Sprüharm 24' in der Spülkammer 14 dargestellt, dafür ist der Übersichtlichkeit halber der Korb weggelassen. Des Weiteren ist dargestellt, dass die Steuerung 26 mit einer zum Funken ausgebildeten Kommunikationseinrichtung 29 verbunden ist. Dargestellt ist hier auch eine externe Bedieneinrichtung 44, wie sie vorstehend genannt worden ist. Diese kann sich entweder per Funk mit der Kommunikationseinrichtung 29 verbinden, so dass mit dieser die Geschirrspülmaschine 11 gesteuert werden kann. Alternativ kann die externe Bedieneinrichtung 44 auch, wie dies in Fig. 3 dargestellt ist, direkt an der Geschirrspülmaschine 11 befestigt werden. Eine Signalübertragung kann dann variiert werden, und es wird keine Kommunikationseinrichtung 29 mehr benötigt oder jedenfalls diese nicht verwendet. Vielmehr kann die externe Bedieneinrichtung 44 an einer Tür 16 der Geschirrspülmaschine 11 angebracht werden, beispielsweise leicht lösbar befestigt werden. Der Übertrager 32 ist vom Spülkammerboden 15 sozusagen um die Ecke nach oben entlang der Tür 16 als Übertrager 32' geführt, also durchgehend, oder möglicherweise mit einem weiteren solchen Übertrager verbunden. Der Übertrager 32' in der Tür 16 weist Schwingkreise 35' auf und ähnelt somit vom Aufbau dem Übertrager 32 am Kammerboden 15. Da derartige Übertrager aber ohnehin Signale und Energie auch in seitlicher bzw. lateraler Richtung übertragen können, geht eine solche Übertragung auch sozusagen um die Ecke bzw. vom Spülkammerboden 15 in die Tür 16.

Die externe Bedieneinrichtung 44 wird auch mit Leistung über den Übertrager 32 versorgt, beispielsweise um Leuchtmittel und/oder ein Display als Anzeige zu betreiben. Eingaben einer Bedienperson an der externen Bedieneinrichtung 44 werden mittels der Übertrager 32' und 32 hin zur Steuerung 26 zur dortigen Verarbeitung übertragen.

Wie in den Fig. 2 bis 4 skizzenhaft angedeutet ist, weist der Übertrager 32 in der Fläche in zwei Richtungen eine Vielzahl von Schwingkreisen 35 auf. Sie sind entsprechend dem Stand der Technik gemäß der DE 10 2017 201 109 A1 nahe beieinander angeordnet, dies wird hier nicht noch einmal im Detail erläutert.

Das Dosiermodul 36 kann auch einen Modulsender 40 aufweisen, um Funksignale beispielsweise nach außerhalb der Geschirrspülmaschine 11 zu übertragen, insbesondere entweder auch an die dort angeordnete externe Bedieneinrichtung 44 oder ein Diagnosegerät odgl.. Vorteilhaft weist das Dosiermodul 36 aber keinen eigenen Modulsensor 40 auf, da zum einen Aufwand eingespart werden kann und zum anderen jegliche Kommunikation mit der Steuerung 26 über den Übertrager 32 laufen kann. Die Steuerung 26 wiederum kann die zuvor beschriebene Kommunikationseinrichtung 29 nach außen aufweisen, die dann beispielsweise außerhalb der Spülkammer 14 angeordnet ist. Diese besteht üblicherweise aus Edelstahl und steht somit hinsichtlich einer Funk-Übertragung von Signalen durch sie hindurch häufig nachteilig im Wege.

In der Fig. 4 ist aus der perspektivischen Darstellung zu erkennen, wie der Übertrager 32 räumlich bzw. flächig ausgebildet ist und dabei insbesondere den Spülkammerboden 15 der Spülkammer 14 weitgehend abdeckt. Dargestellt ist im linken Bereich das zuvor erläuterte Dosiermodul 36. Im hinteren Bereich ist ein autarker Zusatzsensor 46 angeordnet, der bestimmte Sensorwerte innerhalb der Spülkammer 14 erfassen kann. Diese können über den Zweck hinausgehen, für den das Dosiermodul 36 ausgelegt ist. So können beispielsweise entsprechende autarke Zusatzsensoren als relativ günstige Funktionseinheiten nachträglich gekauft werden. Das aufwändig ausgebildete Dosiermodul 36 braucht dann nicht ausgetauscht zu werden. Aus der Fig. 4 ist leicht erkennbar, dass das Dosiermodul 36 an sich beliebig in der Spülkammer 14 unten auf dem Spülkammerboden 15 oder in einem knapp oberhalb davon verlaufenden Korb 17 entsprechend Fig. 1 angeordnet werden kann. Dabei ist es stets mittels des Übertragers 32 mit der Steuerung 26 und der Leistungselektronik 27 verbunden.

Die Steuerung 26 und die Leistungselektronik 27 können so ausgebildet sein, dass es einen Ansteuer-Modus und einen Pumpen-Modus gibt. Im Ansteuer-Modus wird der Übertrager 32 angesteuert und somit sind sämtliche daran angeschlossene Funktionseinheiten angesteuert sowie ausgewertet. In einem Pumpen-Modus wird der Übertrager 32 vorteilhaft abgekoppelt von der Leistungselektronik 27, und diese betreibt nur einen Antriebsmotor und/oder eine Heizeinrichtung der Pumpe 22. Dann kann ein Aufbau der Leistungselektronik 27 einfacher gehalten sein.

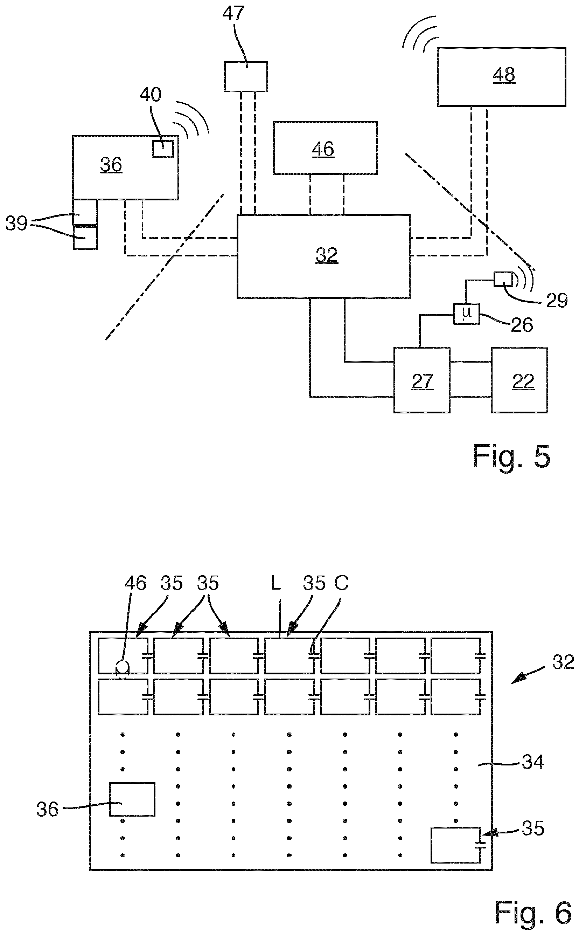

In der schematischen Übersichtsdarstellung der Fig. 5 ist dargestellt, wie sozusagen der Übertrager 32 eine Art Kommunikationsnetzwerk darstellt. Über gestrichelte Verbindungen ist das Dosiermodul 36 mit dem Übertrager 32 und somit mit der Steuerung 26 verbunden. Dies gilt auch für Dosiersensoren 39 sowie einen Modulsender 40, die Bestandteil des Dosiermoduls 36 sind.

Eine weitere gestrichelte Verbindung kann jeweils zu autarken Zusatzsensoren 46 oder autarken Zusatzaktoren 47 gebildet sein. Solche autarken Geräteaktoren können ebenfalls eine Dosierung von bestimmten Stoffen ermöglichen, wozu das Dosiermodul 36 möglicherweise nicht ausgebildet ist.

Eine weitere gestrichelte Verbindung verläuft von dem Übertrager 32 hin zu einem autarken Zusatzgerät 48. Dies kann beispielsweise entsprechend dem Ausführungsbeispiel der Fig. 3 eine externe Bedieneinrichtung sein und allgemein ein mobiles Endgerät.

Der Übertrager 32 ist mit der Leistungselektronik 27 direkt verbunden, die ihn ansteuert und somit seine Signale empfängt, welche an die Steuerung 26 weitergegeben werden. Des Weiteren ist auch die Pumpe 22 mit der Leistungselektronik 27 verbunden. Diese wiederum ist mit der Steuerung 26 verbunden, an welcher eine zuvor beschriebene Kommunikationseinrichtung 29 angeschlossen ist.

Durch die signalübertragende Verbindung, mit der auch Energie bzw. Leistung am Spülkammerboden 15 des Geschirrspülers 11 verteilt werden kann, kann auf entsprechende Funktionalität im Dosiermodul 36 verzichtet werden. Dieses kann also einfacher ausgebildet sein und vor allem auch in der Bedienung freundlicher und simpler. Des Weiteren können weitere Funktionseinheiten wie die vorgenannten Zusatzsensoren, Zusatzaktoren bzw. Zusatzgeräte in der Geschirrspülmaschine 11 nachträglich eingesetzt werden, obwohl die Geschirrspülmaschine 11 ursprünglich dafür gar nicht ausgelegt war.

Wie zuvor erläutert worden ist, kann die Steuerung 26 anhand der Informationen vom Übertrager 32 erkennen, wo in dessen Bereich bzw. wo am Spülkammerboden 15 das Dosiermodul 36 oder eines der vorgenannten zusätzlichen Geräte angeordnet ist. Dann kann eine Ansteuerung insbesondere auch diesen Anbringungsort berücksichtigen, was die Ansteuerung und damit auch die Funktion des Dosiermoduls besonders genau und vielseitig sowie anpassungsfähig macht.

Ein Übertrager 32 ist in Fig. 6 in Draufsicht dargestellt. Er ist, wie die Schnittdarstellung der Fig. 2 bereits zeigt, sehr flach und weist beispielsweise einen dünnen Träger 34 auf, der sogar folienartig ausgebildet sein kann. Auf diesem Träger 34, selbst als Folie, können die L-C-Schwingkreise 35 direkt aufgebracht sein, entweder durch Aufkleben oder durch direktes Beschichten bzw. auch Bedrucken. Dem Fachmann sind entsprechende Verfahren geläufig und stellen ihn vor keinerlei Probleme. Es ist zu erkennen, dass die L-C-Schwingkreise 35 jeweils eine Übertragerspule L und eine Übertragerkapazität C aufweisen. Bei der Darstellung der Fig. 6 soll der Träger 34 weitgehend vollflächig, insbesondere bis auf eine mittlere Durchführung des Ablaufs 19, mit derartigen L-C-Schwingkreisen 35 versehen sein.

Vorteilhaft sind sämtliche L-C-Schwingkreise 35 identisch ausgebildet. Wie zu erkennen ist, sind sie auch jeweils gleich ausgerichtet bzw. angeordnet. Dies muss nicht zwingend so sein, hat sich aber als vorteilhaft erwiesen für eine gute Energieübertragung innerhalb des Übertragers.

Der Abstand zwischen benachbarten L-C-Schwingkreisen 35 bzw. vor allem den Übertragerspulen L kann relativ gering sein und beispielsweise zwischen 1 mm und 15 mm liegen, vorteilhaft zwischen 2 mm und 10 mm. Dies gilt sowohl für seitlich nebeneinander angeordnete als auch für hintereinander angeordnete Übertragerspulen L. Der Abstand sollte so gering sein, dass sie auf alle Fälle in jeder Richtung induktiv miteinander gekoppelt sind. In einer Ausgestaltung der Erfindung ist sogar vorstellbar, dass verschiedene Übertragerspulen L, insbesondere benachbarte, in unterschiedlichen Ebenen verlaufen und sich in Draufsicht sogar überlappen.

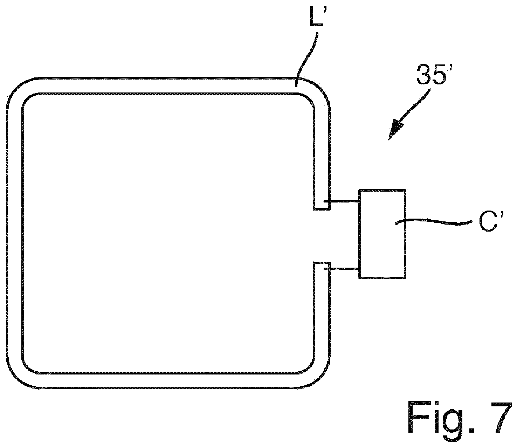

In der Fig. 7 ist in Vergrößerung ein L-C-Schwingkreis 35' dargestellt, wie er in der Praxis ausgestaltet sein könnte. Er weist eine Übertragerspule L' auf, die aus einer einzigen Windung besteht und deren Spulenenden nicht ganz geschlossen sind bzw. einen geringen Abstand zueinander aufweisen. An diesen Spulenenden ist eine Übertragerkapazität C' angeschlossen, wobei diese Übertragerkapazität vorteilhaft ein diskretes Bauteil ist, beispielsweise ein SMD-Bauteil. Die Kapazität kann im Bereich von < 1 mF liegen, vorteilhaft < 100 µF.

Eine Induktivität einer einwindigen Übertragerspule L' kann im Bereich von etwa 1 µH liegen. Eine Kapazität der Übertragerkapazität C' kann für eine gewünschte Frequenz von etwa 20 kHz bei etwas über 30 µF liegen und für eine Frequenz von 30 kHz bei etwa 15 µF. Die Übertragerkapazitäten C' sind entsprechend zu wählen.

Eine Erhöhung der Windungsanzahl einer Übertragerspule L wirkt sich signifikant auf ihre Induktivität aus, wie leicht absehbar ist. Mit jeder zusätzlichen Windung steigt natürlich der Herstellungsaufwand für die Übertragerspulen L und somit auch für den gesamten Übertrager 32.

Allerdings kann sich der Herstellungsaufwand für zusätzliche Windungen lohnen, wenn insbesondere sehr verschiedene Frequenzen in dem System bzw. in der Geschirrspülmaschine in Einklang gebracht werden sollen, beispielsweise die Frequenz des Inverters mit der Frequenz der Übertragung mittels NFC, Bluetooth, odgl.. Die Möglichkeiten zur Abstimmung sind dem Fachmann aus der Theorie der gekoppelten Schwingkreise bekannt. Er muss lediglich die L-C Resonanzen und die Kopplungen aufeinander abstimmen, wie dies aber in der Literatur zu gekoppelten Schwingkreisen ausführlich beschrieben ist. Des Weiteren kann es allgemein von Vorteil sein, sich intern in der Geschirrspülmaschine auf Frequenzen im höheren kHz Bereich zu fokussieren, vorteilhaft Frequenz von 30 kHz oder 50 kHz bis Frequenz von 80 kHz oder 200 kHz. Damit kann sichergestellt werden, dass keine Störungen des elektromagnetischen Feldes von außen die Kommunikation zwischen beispielsweise Übertragungsvorrichtung und Dosiermodul negativ beeinflussen.

## Patentansprüche

1. Geschirrspülmaschine mit:
- einer Spülkammer mit Kammerwandungen und mit einem Auslass,
- Wasserleitungen, Ventilen und einer Pumpe,
- mindestens einem Wassereinlass in die Spülkammer, der mittels Wasserleitungen mit der Pumpe verbunden ist,
- einem Dosiermodul in der Spülkammer, das Zusatzstoffe und/oder Reinigungsstoffe enthält zur Zugabe in ein Reinigungsverfahren, wobei das Dosiermodul mindestens eine Vorratskammer für einen Zusatzstoff und/oder einen Reinigungsstoff aufweist und ein Dosierventil aufweist zur Freigabe in die Spülkammer hinein, wobei das Dosiermodul als eigenständige Baueinheit unabhängig von der Geschirrspülmaschine ausgebildet ist und aus dieser entnehmbar ist,
- einer Steuerung für die Geschirrspülmaschine, für das Dosiermodul, für die Pumpe und für die Ventile,
**dadurch gekennzeichnet, dass**
- das Dosiermodul ein Kommunikationsmodul aufweist zur Kommunikation mit der Steuerung,
- entlang einer Kammerwandung der Spülkammer eine flächige Übertragungsvorrichtung zur Übertragung von Signalen und/oder Energie in der Fläche der Übertragungsvorrichtung angeordnet ist,
- die Übertragungsvorrichtung eine Vielzahl von induktiv aneinander gekoppelten Schwingkreisen aufweist mit jeweils einer Übertragerspule und einer Übertragerkapazität als L-C-Schwingkreis, wobei die Übertragerspulen im Wesentlichen in der Fläche verlaufen,
- die Übertragungsvorrichtung bis zu dem Kommunikationsmodul bzw. bis zu einer Entfernung von weniger als 5 cm zu dem Kommunikationsmodul angeordnet ist und mit diesem signalübertragend verbunden ist,
- die Übertragungsvorrichtung mit der Steuerung signalübertragend verbunden ist.

2. Geschirrspülmaschine nach Anspruch 1, **dadurch gekennzeichnet, dass** eine signalübertragende Verbindung zwischen dem Kommunikationsmodul des Dosiermoduls und der Übertragungsvorrichtung drahtlos ausgebildet ist, insbesondere induktiv erfolgt, wobei dafür das Kommunikationsmodul eine mit der Übertragungsvorrichtung induktiv koppelbare Spule aufweist.

3. Geschirrspülmaschine nach Anspruch 1 oder 2, **dadurch gekennzeichnet, dass** das Dosiermodul eine eigene Energiequelle aufweist, insbesondere einen Akkumulator oder eine Batterie.

4. Geschirrspülmaschine nach Anspruch 1 oder 2, **gekennzeichnet durch** eine drahtlose Energieversorgung des Dosiermoduls mittels der Übertragungsvorrichtung.

5. Geschirrspülmaschine nach einem der vorhergehenden Ansprüche, **dadurch gekennzeichnet, dass** die Steuerung direkt galvanisch mit der Übertragungsvorrichtung signalübertragend verbunden ist.

6. Geschirrspülmaschine nach einem der Ansprüche 1 bis 4, **dadurch gekennzeichnet, dass** die Steuerung drahtlos und induktiv mit der Übertragungsvorrichtung signalübertragend verbunden ist, vorzugsweise über eine Steuerungsspule, die induktiv mit der Übertragungsvorrichtung gekoppelt ist, wobei insbesondere die Steuerung mit einem Inverter verbunden ist, der mit der Steuerungsspule verbunden ist, wobei die Steuerung über den Inverter in einem Ansteuer-Modus die Steuerungsspule ansteuert zur Signalübertragung mittels der Übertragungsvorrichtung an das Kommunikationsmodul des Dosiermoduls, wobei vorzugsweise der Inverter dazu ausgebildet ist, in einem Pumpen-Modus die Pumpe aufgrund von Steuersignalen der Steuerung zu betreiben und mit Leistung zu versorgen.

7. Geschirrspülmaschine nach Anspruch 4 und nach Anspruch 6, **dadurch gekennzeichnet, dass** der Inverter über die Steuerungsspule und die Übertragungsvorrichtung das Dosiermodul über dessen Kommunikationsmodul mit Energie versorgt und mit Steuersignalen ansteuert.

8. Geschirrspülmaschine nach einem der vorhergehenden Ansprüche, **dadurch gekennzeichnet, dass** die Steuerung dazu ausgebildet ist, die Ventile in der Geschirrspülmaschine anzusteuern.

9. Geschirrspülmaschine nach einem der vorhergehenden Ansprüche, **dadurch gekennzeichnet, dass** die Steuerung die einzige Steuerung in der gesamten Geschirrspülmaschine ist, insbesondere einen Mikrocontroller aufweist, welcher der einzige Mikrocontroller in der gesamten Geschirrspülmaschine ist.

10. Geschirrspülmaschine nach einem der vorhergehenden Ansprüche, **dadurch gekennzeichnet, dass** eine signalübertragende Verbindung von außerhalb der Geschirrspülmaschine mittels eines mobilen Endgeräts, insbesondere eines Tablet-Computers oder eines Smartphones, mit der Steuerung vorgesehen ist, wobei vorzugsweise die Übertragungsvorrichtung auch innen an einer Außenseite der Geschirrspülmaschine, insbesondere an einer Tür der Geschirrspülmaschine, vorgesehen ist, um hier eine induktive Kopplung mit dem mobilen Endgerät herzustellen zur Signalübertragung an die Steuerung und/oder an das Dosiermodul.

11. Geschirrspülmaschine nach einem der vorhergehenden Ansprüche, **dadurch gekennzeichnet, dass** die Übertragungsvorrichtung mindestens ein Drittel einer Bodenfläche der Spülkammer als Kammerwandung einnimmt, vorzugsweise die Bodenfläche zu mindestens zwei Dritten einnimmt.

12. Geschirrspülmaschine nach einem der vorhergehenden Ansprüche, **dadurch gekennzeichnet, dass** die Übertragungsvorrichtung und die Steuerung dazu ausgebildet sind, den Ort zu erkennen, an dem das Dosiermodul in der Spielkammer angeordnet ist, wobei vorzugsweise der mindestens eine Wasserauslass derart von der Steuerung ansteuerbar ist, dass Wasser im Wesentlichen oder ausschließlich an den Ort hin ausgebracht wird, an dem das Dosiermodul angeordnet ist, wobei insbesondere dafür der mindestens eine Wasserauslass eine in ihrer Richtung verstellbare Düse ist oder aufweist.

13. Verfahren zur Steuerung einer Geschirrspülmaschine nach einem der vorhergehenden Ansprüche, **dadurch gekennzeichnet, dass** die Steuerung über die Übertragungsvorrichtung das Dosiermodul mittels dessen Kommunikationsmoduls ansteuert, um einen bestimmten Zusatzstoff und/oder Reinigungsstoff freizugeben.

14. Computerprogramm, das dazu ausgebildet ist, das Verfahren nach Anspruch 13 an der Steuerung der Geschirrspülmaschine nach einem der Ansprüche 1 bis 12 durchzuführen.

15. Datenträger, insbesondere Speicherchip, auf dem ein Computerprogramm nach Anspruch 14 abgespeichert ist.
